# EUROPEAN PATENT APPLICATION

(11) **EP 2 363 449 A1**
(43) Date of publication of application: **07.09.2011**
(21) Application number: 09828590.1
(22) Date of filing: 28.10.2009
(51) Int. Cl.: C10L 1/04, C10L 5/00, F02B 45/10, F02M 61/10

(54) **MIXED FUEL CONTAINING COMBUSTIBLE SOLID POWDER AND AN ENGINE USING THEREOF**

(30) Priority: 03.11.2008 CN 200810176127; 17.11.2008 CN 200810181384; 04.01.2009 CN 200910003447; 18.07.2009 CN 200910164585
(71) Applicant: Qin, Caidong, Maanshan City, Anhui 243000 (CN)
(72) Inventor: Qin, Caidong, Maanshan City, Anhui 243000 (CN)
(74) Representative: Glawe, Delfs, Moll
(86) International application number: PCT/CN2009/074673
(87) International publication number: WO 2010/060330

(57) **Abstract**

The present invention refers to a fuel mixture that contains combustible solid powder and produced by mixing combustible solid powder and liquid fuel. It is in a simple way to make use of renewable biomass materials instead of fossil fuel for driving internal combustion engine to provide powder, in favor of saving fossil fuel resource. And an engine can use the fuel mixture.

## Description

### Field of the Invention

The present invention relates to a fuel mixture containing combustible solid powder and a manufacturing method thereof; the present invention also relates to an engine able to use said fuel mixture and a needle valve, a plunger both applied for the engine.

### Background of the Invention

Substitutes of fossil fuel for combustion engine, gas-turbine, and the like (hereinafter referred to as combustion engine), especially produced by reproducible biomass, generally, are obtained from liquid fuel, such as traditional ethanol fuel, or biomass pyrolysis likewise. However, components of biomass mainly are cellulose and hemicellulose with low energy density which have lower energy conversion and utilization rate. In addition, liquefying biomass leads to complicated process with high energy consumption and cost, and the products of traditional biomass liquefaction method have diverse components which are difficulty to purify. Thus, the traditional biomass liquefaction process can't effectively solve the problem caused by fossil fuel substitution.

For the combustion engine using fuel in liquid state at present, the engine should be re-designed while adopting the solid powder as the only fuel, the re-designed process includes, for example, improving the current way of fuel transportation and supply as well as ignition. Thus, it is difficult for solid powder fuel to have a practical application in transport vehicles. In the field of fuel mixture with powder and liquid fuel, the technical solution disclosed in US patent application whose application number is 7241321 provided a method for the preparation of clean-burning fuel used for heating and the method included steps of dehydrating and grinding lignocellulose to obtain lignocellulose particles, the particle diameter of which is between 20-500µm; then mixing the lignocellulose particles with vegetable oil or phytol, which results in cream-like viscous and milky suspension or a paste-like viscous and syrupy mixture according to the respective lignocellulose contents. WO 2009102272 also disclosed a technical solution that utilizes glycerol from vegetable oil as a carrier to mix with lignin or grinded biomass particle to obtain syrupy fuel. The syrupy fuel had high viscousness, but it still could be pumped. Although the syrupy fuel had pump conveyance feasibility, it could be used as heating fuel only for ordinary furnaces and it was difficult to conduct spray-burning in cylinders of engines.

Considering the current situation stated, it is necessary to provide new liquid fuel or fuel mixture, and even a new oil pump transport system of a realized product in which substitutes or part-substitutes of fossil fuel are used to drive the combustion engine.

### Summary of the Invention

To solve the stated problem of prior art, the present invention provides a fuel mixture of combustion with combustible solid powder in tiny size (especially lignocellulose fine particles that has the highest energy density in biomass composition) and liquid fuel mixed. The fuel mixture could be used as the substitution of current liquid fuel and have advantages including prominent energy conservation characteristic, environment-protective, safe and low-costly.

The present invention also provides a method of using and producing the fuel mixture.

The present invention also provides an engine using the fuel mixture and a needle valve and a plunger for the engine.

To achieve the above aims, the present invention first provides a fuel mixture used for combustions comprising a suspension of combustible solid powder and liquid fuel, wherein said combustible solid powder comprising one powder selected from lignin, nitrification products of biomass and total biomass powder or any combination thereof and said liquid fuel comprising one fuel selected from gasoline, kerosene, diesel, heavy oil used for combustions, emulsified heavy oil and absolute ethanol or any combination thereof.

As measured in its total amount, the fuel mixture provided in the present invention preferably contains the combustible solid powder in an amount ranging from 0.1v% to 85v% and the liquid fuel as the remain. To be better used in current engines, the fuel mixture preferably contains the combustible solid powder in an amount ranging from 1v% to 25v%, more preferably, from 1v% to 10v%; in the improved engine referring to the present invention, the fuel mixture contains the combustible solid powder in an amount ranging from 1v% to 85v%, preferably, from 25v% to 85v%, more preferably, 25v% to 50v%; the lower limit 1v% is determined to take effect of helping fuel burning and decreasing pollution emission with enough combustible solid power added as for oxygen-fuel.

Referring to the fuel mixture provided in the present invention, the combustible solid powder generally has particle size of less than 150µm, preferably, less than 50µm, more preferably, less than 20µm, or even less than 5µm, most preferably, less than 1µm.

Referring to the fuel mixture provided in the present invention, the total biomass powder is preferably ordinary total biomass powder (as powder made of aired wood, straw, and the like) and/or condensate stabilized total biomass powder, and the like.

Referring to the fuel mixture provided in the present invention, the lignin preferably is selected from original lignin, isolated lignin (lignin isolated from plant body such as lignin obtained by acid hydrolyzing carbohydrate in plants, and side products mainly obtained from different methods of paper-making, for example, lignin obtained in alkaline way, lignin obtained by solvent methods), different degradation products of lignin obtained after treatments, condensation polymerization products of lignin (such as products obtained by condensation polymerization of lignin and other components of biomass or of biomass degradation products ), partial oxidized lignin, partial deoxidized lignin, partial hydrolyzed lignin, acidolysed lignin, photolyzed lignin, biodegradated lignin, low-temperature pyrolyzed lignin (partial carbonized lignin included), acylated lignin, alkylated lignin, nitrated lignin, or any combination thereof; more preferably, the lignin is formed after acidifying the lignin above by bio-acid and thus termed acidified lignin herein; more preferably, the lignin is formed after heating the lignin above or the acidified lignin and condensation stabilizing them, especially mixing them in the liquid fuel and then heating them and stirring and grinding them meanwhile, and thus termed condensate stabilized lignin or condensate stabilized acidified lignin.

The condensation referring to the present invention is a reaction between two organic compound molecules of same kind or of different kinds (for example, total biomass and different components thereof such as cellulose, hemicellulose, lignin, and the like), or a reaction of producing a quite large molecule but not certainly a simple one by acid or alkaline catalyst and/or under a high-temperature condition, or producing rearrangement of chemical bonds or recombination of unsaturated double bonds, branched-chain, carbonyl, hydroxyl at the end, and the like between or in the molecules of tiny particles of organic compounds. The condensation lowers chemical reactivity of the organic compounds and absorptivity of water on their surfaces, achieves their stability, which makes tiny particles obtained by fragmentation or chemical synthesis of the organic compounds hard to proceed condensation reaction between the particles resulting in particles of larger diameters, so that the organic compounds are kept in tiny particle state during using process, and thus termed "condensation stabilization". The purpose of condensation stabilization in the present invention is to achieve the condensation stabilization of all components of the biomass (including the lignin) inside the molecules or inside the tiny particles, but prevent them from becoming larger through further condensation reactions between the tiny particles or the fragmented ones.

The fuel mixture provided in the present invention preferably further comprises anthraquinone, 2-naphthol, naphthalene, methyl anthraquinone, hydroquinone, quinone, phenanthrene quinone, naphthoquinone, anthrone, quinone diol, naphthalene diol, phenanthrene diol, their alkyl, alkoxy, hydroxyl, amino, carboxyl derivatives, their precursors and the tautomers, and their salts thereof in any one of the combinations; more preferably, the content ranges of the above additives account for 0.001-0.07% of the weight of the lignin.

The present invention also provides a method of using the fuel mixture, including steps of continuously dynamic mixing the fuel mixture; preferably, the dynamic mixing is performed by mechanical stirring, mechanical vibration, or ultrasonic vibration; more preferably, the speed of mechanical stirring is ranging from 200 to 300 revolutions per minute; the ultrasonic frequency is 20-40KHz with 50-500W power.

The present invention also provides an engine using the fuel mixture, with a purpose of transmitting the fuel mixture uniformly to the engine and spraying and combusting it in the cylinder. The engine includes a tank with a dynamic-mixing device or two tanks wherein one of the tanks has an inlet and an outlet as regular tanks, and the tank further includes a dynamic-mixing device, a circulating pump device, a funnel-shaped feeding device, a compressor pressuring device or a piston-pushing device; preferably, the dynamic-mixing device is a mechanical stirring device, a mechanical vibration device, an ultrasonic vibration device or an outlet device of uniformly releasing the fuel mixture; more preferably, the outlet device of uniformly releasing the fuel mixture is an oil-transmitting system having a plurality of inlets distributed at different heights of the tank (equipped with a piston-pushing device or a sucking device of an oil-transmitting pump, so that the solid powder of the fuel mixture in different content can be transmitted to the transmitting or injecting pump), or an oil-transmitting system having an inlet which moves in consistent with the liquid level of the fuel mixture. The engine is applied not only to the fuel mixture in the present invention, but also to current different liquid fuel such as gasoline, diesel, ethanol, and the like.

The engine provided in the present invention preferably includes two tanks having one injector respectively; more preferably, the engine includes two tanks with one injector that is shared between the tanks and is connected to the tanks by two fuel channels respectively.

The injector joining two tanks preferably joins an outlet valve that includes an output sub-valve, a spring, and an input sub-valve, wherein the spring situated at the cavity of the valve is having one end connected to the wall of the cavity while the other end connected to the input sub-valve (or fixed to the input sub-valve) which has an opening for receiving the fuel and is connected to the output sub-valve by a link; or the injector joins a screw pump feeding device (which substitutes the input sub-valve, and disposes a driving wheel that drives the screw to rotate and obtains driving force by directly or indirectly connecting the rotating shaft of the engine, and an inlet to receive the fuel mixture from the tank) to transmit the fuel mixture with low fluidness as having a high content of solid powder (that is, the fuel mixture is hard to naturally flow ). When using the above outlet valve, the fuel mixture first is pumped to the injector through the outlet valve at low pressure, then carried with pure fuel pumped by a fuel pump at high pressure and injected to the cylinder; the present technical solution solves the problem of the fuel mixture incapable of naturally flowing because of its volume content of the solid powder higher than 25v% and the liquid content correspondingly low, that is, the fuel mixture with a large amount of solid powder can be carried with proceeding pure fuel and injected into the cylinder or the combustion chamber in the engine.

The present invention also provides a needle valve for the fuel pump of the engine, wherein the needle valve has an electromagnetic driving device that rotates the needle valve. The other parts of the needle valve in the present invention has a same or similar structure with regard to the current valves in the prior art.

The present invention also provides a plunger for the fuel pump of the engine wherein the plunger comprises a plunger ring (the ring is disposed at the front end of the plunger), or a filter set (the filter set is in front of the plunger ), or the two ends of the plunger are respectively connected to a cam, or one end is connected to a cam, while the other is connected to a pulley, so that the plunger moves to and fro in such a way that the cam drives or the cam drives while the pulley pulls. The other parts of the plunger in the present invention has a same or similar structure with regard to the current plungers in the prior art. The plunger connected to the cam is used to achieve the control of the maximum oil output by controlling the cam stroke.

The present invention also provides a method of using the fuel mixture, that is, applying the fuel mixture to the engine. The method comprises steps of dynamic-mixing the fuel mixture before using it or during the process.

The present invention also provides a method of producing a fuel mixture containing combustible solid power (such as biomass-based fuel powder) and liquid fuel, comprising the steps of:
a) mixing the combustible solid powder and the liquid fuel; and
b) subjecting the mixture which is stirred, sheared and ground from step a) to distillation and dehydration and forming the fuel mixture containing the combustible solid powder and the liquid fuel. Preferably, the distillation and dehydration is carried out at a temperature ranging from 110°C to 150°C, more preferably ranging from 120 °C to 130 °C.

The content of the solid fuel for actual use is regulated by decreasing or increasing the content of liquid fuel in step b).

The method of producing the fuel mixture in the present invention preferably comprising the steps of:
a) subjecting the combustible solid powder to drying and dehydration (eg. drying and dehydrating it at high temperature; preferably, the temperature is ranging from 110°C to 300°C, more preferably ranging from 130°C to 250°C), and mixing the dried combustible solid powder with liquid fuel; and;
b) obtaining the mixture from step a) to be coarsely ground or finely ground and forming the fuel mixture containing the combustible solid powder and the liquid fuel.

Preferably, before step a), the method of producing the fuel mixture in the present invention further includes a step of removing the minerals in the combustible solid powder adopting acid washing method, and/or a step of acidification and stabilization, such as acidification treatment, to turn the lignin of the biomass into acidified lignin.

Preferably, step a) of the method of producing the fuel mixture in the present invention further includes the step of adding anthraquinone, 2-naphthol, naphthalene, methyl anthraquinone, hydroquinone, quinone, phenanthrene quinone, naphthoquinone, anthrone, quinone diol, naphthalene diol, phenanthrene diol, their alkyl, alkoxy, hydroxyl, amino, carboxyl derivatives thereof, their precursors and tautomers thereof, their salts thereof in any one of the combinations to the mixture.

Preferably, in the method of producing the fuel mixture in the present invention, the above-mentioned combustible solid powder is lignin; more preferably, the lignin is acidified lignin which could be obtained by acidifying the lignin or by further condensation stabilizing the former acidified lignin, and the method comprises the steps of:
a) dissolving a lignin in water to obtain a lignin solution or using a paper-making waste liquid having lignin dissolved therein as the lignin solution;
b) adding an inorganic acid by pouring or spraying the acid to the lignin solution as obtained from step a) to acquire a flocculated acidified lignin precipitate;
c) subjecting the flocculated acidified lignin precipitate as obtained from step b) to washing, filtrating and drying steps;
d) mixing the flocculated acidified lignin precipitate as obtained from step c) with liquid fuel; or pouring the flocculated acidified lignin precipitate as obtained from step c) into the liquid fuel and further adding a total biomass powder which has been subjected to condensate stabilization; and
e) shear-mixing the mixture as obtained from step d) and forming a colloidal fuel mixture; or shear-mixing the mixture as obtained from step d) and further subjecting the mixture to distillation and dehydration and forming the fuel mixture.

In the method of producing the fuel mixture in the present invention, the fuel mixture also could be produced by using the flocculated acidified lignin precipitate obtained from step c) or the mixture obtained from step d) or the colloidal fuel mixture obtained from step e) by nozzle spraying or injecting them to the surface of the fuel or into the fuel. Preferable, adopting this dehydrating method, even smaller particles could be produced by mixing the acidified lignin and the liquid fuel together before dehydration.

In actual use, the contents of the acidified lignin, the acidified lignin treated after condensation stabilization, and/or the all combustible solid powder treated after condensation stabilization are regulated by decreasing or increasing the content of liquid fuel in step e).

Preferably, the lignin used in the method of producing the fuel mixture of the present invention could be produced by adopting the extraction method which comprises the steps of:
1) dissolving a lignin in water to obtain a lignin solution, or using a paper-making wasted liquid containing lignin as the lignin solution; adding inorganic acid and organic solvent into the lignin solution, meanwhile, stirring, shearing and emulsifying the lignin solution, thus the lignin solution is stratified into flocculent mixtures and aqua after standing still and the flocculence floats above the mixture solution;
2) taking out the flocculence (eg. removing the water through the bottom of the container, and reserving top of the solution containing flocculence) and a mixture containing acidified lignin, organic solvents, and a little water is obtained;
3) removing the water and the organic solvent of the mixture (containing flocculence with a little water or the solution with flocculence) obtained in step 2, and the lignin could be used in the method of producing the fuel mixture in the present invention is obtained.

Preferably, the inorganic acid comprises sulfuric acid, nitric acid, hydrochloric acid, and the like; the organic solvent includes diesel, kerosene, heavy oil, petroleum ether, or chloroform, and the like; heating or distilling could be used to remove water.

The method of extracting the lignin in the present invention preferably comprises the steps of:
1) dissolving a lignin in water to obtain a lignin solution or using a paper-making waste liquid having lignin dissolved therein as the lignin solution;
2) adding an inorganic acid by pouring or spraying the acid to the lignin solution as obtained from step a) to acquire a flocculated acidified lignin precipitate;
3) using the mixture as obtained from step 2) to be added with an organic solvent which is not compatible with water and subjecting the latter mixture to stirring, shearing and emulsifying steps and forming a colloidal emulsified mixture;
4) allowing the colloidal emulsified mixture to be standing still for causing the formation of stratified layers (stratified into acid water and organic solvent containing tiny acidified lignin particles), and thereby removing the water layer at the bottom and thus obtaining the colloidal emulsified mixture containing the colloidal acidified lignin, the organic solvent and water; and
5) having the water and the organic solvent from step 4) to be distilled and removed for acquiring the lignin or acidified lignin.

Preferably, in the method of producing the fuel mixture in the present invention, the combustible solid powder is lignin, more preferably, the lignin is acidified lignin which is produced by acidification, or by further condensation stabilizing the former acidified lignin, and the method comprises the steps of:
a) dissolving a lignin in water to obtain a lignin solution or using a paper-making waste liquid having lignin dissolved therein as the lignin solution;
b) adding an inorganic acid by pouring or spraying the acid to the lignin solution as obtained from step a) to acquire a flocculated acidified lignin precipitate;
c) subjecting the flocculated acidified lignin precipitate as obtained from step b) to washing, filtrating and drying steps;
d) spray drying the flocculated acidified lignin precipitate which has been washed, filtered and dried in step c) to acquire an acidified lignin powder or a condensate stabilized acidified lignin powder; or drying the flocculated acidified lignin obtained from step c) to acquire the acidified lignin or the condensate stabilized acidified lignin both in the form of lumps;
e) grinding and mixing the acidified lignin powder or lumps or the condensate stabilized acidified lignin powder or lumps as obtained from step d) with liquid fuel and forming the fuel mixture containing the acidified lignin or the condensate stabilized acidified lignin and the liquid fuel.

The method of producing the fuel mixture in the present invention includes lignin. When the lignin is acidified lignin (the acidified lignin is obtained after acidifying the lignin), the temperature of dehydrating by drying or distilling is generally lower than 105 °C, and the temperature of spray drying is generally lower than 200 °C. When the lignin is condensate stabilized acidified lignin, the temperature of dehydrating by drying or distilling is generally higher than 105°C, and the temperature of spray drying is generally not lower than 200°C; preferably, the drying temperature range is 110-300°C, the distilling temperature range is 110-150 °C, and the spray drying temperature range is 200-350°C; more preferably, the drying temperature range is 130-250°C, the distilling temperature range is 120-130°C, and the spray drying temperature range is 250-300°C.

The method of producing the fuel mixture in the present invention includes lignin; preferably, the lignin is acid and obtained by acidification and condensation stabilization, wherein, the condensation stabilization is a dehydrating treatment such as distillation for acidified lignin over 100°C; the particles of the treated lignin can distribute in water, showing good insolubility and incapable of absorbing or adsorbing water; when mixed with the liquid fuel, the lignin particles still have good stability and distribution and will not be combined with each other; more preferably, the acidified lignin or condensate stabilized acidified lignin has an average particle size of less than 1 µm.

The method of producing the fuel mixture in the present invention preferably includes step a) in which the lignin solution is preferably added by anthraquinone, 2-naphthol, naphthalene, methyl anthraquinone, hydroquinone, quinone, phenanthrene quinone, naphthoquinone, anthrone, quinone diol, naphthalene diol, phenanthrene diol, their alkyl, alkoxy, hydroxyl, amino, carboxyl derivatives thereof, their precursors and the tautomers thereof, the salts thereof in any one of combination.

Generally, the lignin is hard to be ground into tiny particles because small particles of broken lignin tend to have re- condensation-polymerization reaction; it is found that lignin heat-treatment at high temperature, addition of small amount of anthraquinone and other means help to prevent condensation with each other among tiny particles.

Generally the lignin is extracted from the paper-making wastewater; when directly spraying and drying the lignin in the wastewater or acidifying and precipitating it, the particles obtained are large and alkaline, neutral, or weak acid; as they tend to absorb water or adsorb water on its surface, it's easy for the lignin particles to cause water-absorption and caking during the work so that the working parts in the oil circuit such as plungers and needle valves are subject to block, thus, the lignin should have an improved process to become combustion fuel for actual use. The optimum solution of substituted fuel for engine is that before mixing it with fuel, acidifying or pickling lignin and then drying and fining it at high temperature, which, on one side, decreases the metal ions of the lignin, on the other side, avoids absorbing water or adsorbing water on its surface; that is, the optimum solution of extracting lignin from paper-making blackwater is that acidifying the blackwater to obtain water-insoluble acidified lignin, and the acidified lignin is washed firstly to remove the water-soluble impurities such as salt, free acid, alkali, and the like, and then dehydrated as drying or spray drying. To save heating energy for drying, drying temperature range is 110-120°C, preferably at 120°C at least (such as 130 °C), the highest drying temperature is preferably lower than 300°C; as the lignin's heating time for spray drying is short, the air temperature is selected between 200-300°C, or further heating the powder after spray drying to obtain acidified lignin with complete condensation stabilization, that is, the condensation is not allowed between each other after the lignin breaks. Finally, grinding the lignin after drying or dehydrating, mixing it with liquid fuel (or mixing it with liquid fuel firstly and then grinding them), and the fuel mixture is obtained. However, the process of drying at high temperature or spray dehydrating and then grinding produces more steps, which will increase production cost, and also hardly obtains tiny acidified lignin particles; the optimum solution is that directly mixing the acidified lignin containing moisture with fuel, stirring, shearing, and grinding the mixture at high speed, or high-frequency vibration grinding the mixture, or ultrasonic grinding the mixture, meanwhile, distilling and dehydrating it at the temperature as high as 110-120°C, or higher than 120°C (such as 130°C), so that the acidified lignin is completely condensate stabilized, thus, condensate stabilized tiny acidified lignin particles (of nanometer size) mixed with liquid fuel are easy to be prepared. It is found that addition of small amount of anthraquinones as anthraquinone, methyl anthraquinone, 2-naphthol, etc. can prevent condensation among tiny lignin particles, thus, minute lignin particles are easy to be obtained. The purpose of keeping grinding the mixture while heating and distilling it is to decrease the diameter of the lignin particles and avoid condensation of the lignin particles during dehydration, which will lead to enlargement of the lignin particles.

The technical solution in the present invention also includes directly mixing the acidified lignin which contains a little water with liquid fuel, without previous drying or spray drying, and then stirring, shearing, and grinding the mixture at high speed, and colloidal fuel mixture is obtained.

The calorific value of cellulose (other carbonhydrate included) , that is, energy density, is low, which is almost as half as that of lignin, and the cellulose is hard to be grind into movable ball-like particles (or similar to ball) because of its long shape, thus, it's not optimum and practical for cellulose particles or ordinary carbonhydrate (such as cellulose) to be directly used as fuel for the combustion. However, the nitrocellulose which tends to be combustible can replace the lignin to prepare for the fuel mixture of the present invention with liquid fuel. Nitrocellulose and nitrolignin are obtained from nitrification of total biomass, besides these, nitration products, such as nitro-starch, nitro-ester, nitro-hemicellulose, and so on are obtained. The mixtures of these nitration products not only have high energy density but also tend to be ignitable with rapid burning and energy release. Moreover, such mixtures of the nitration products, which have lower production cost compared with pure nitrocellulose or nitrolignin, could be used as substitutes of the lignin as well.

The technical solution of mixing combustible solid powder as lignin, etc. with liquid fuel and keeping them flowing meanwhile by means of machine stir is simple and feasible. For example, dynamic-mixing devices used as mechanical stirring devices for the fuel mixture could be configured with the engine.fuel mixture Or two tanks could be configured with the engine, one of these two tanks is a conventional tank filles with gasoline, kerosene, or diesel; and the other is a tank with a stirring device as a blender, or configured with a plurality of inlets of oil-transmitting system, or with an inlet system rotating with the liquid surface of the fuel mixture, is used in storage of the fuel mixture containing solid powder such as lignin and liquid fuel. Consistent with one embodiment of the present invention, each tank is configured with a high-pressure oil pump respectively to pump the fuel to the cylinder through its respective injector, according to the predetermined proportion and injection times. Consistent with another embodiment of the present invention, each tank is configured with a high-pressure oil pump respectively while sharing one injector. Consistent with one embodiment of the present invention, these two tanks share one oil pump and one injector with each other, carrying out the function and the purpose of dynamic-cleaning the oil circuit using pure fuel intermittently.

To avoid or decrease the influence of solid powder fuel on different plungers' movements in the oil circuit of the engine, a number of technical solutions are available. For example, either a plunger ring or a plunger scraper ring, which is similar with the piston ring in the cylinder, is disposed at the front end of the plunger body. Or a filter set moved with the piston is disposed in front of the plunger to prevent the solid particles of certain diameter from entering into the space between the plunger and the plunger set. Other than that, injecting pure liquid fuel in the interface between the plunger and the plunger set at high pressure could be adopted so that it is hard for fuel particles to enter into the interface Moreover, it is available to substitute mechanical-propelling for spring-propelling to move the plunger to and fro, for example, the plunger-propelling (or the plunger propelling and pushing). To decrease the block of the needle valve of the injector, mechanical-driving controlled by motor could be used to rotate the needle valve during oil injection.

Compared with the current ones, the structures of the engine provided in the present invention as well as the needle valve and the plunger are better applied to the fuel mixture, satisfying the requirements of full combustion for the fuel mixture with combustible solid powder.

The technical solution in the present invention can solve some problems as follows:
1. The fuel mixture, used for driving combustions, etc. by harnessing renewable biomass resources in a simple way to replace fossil fuel, is provided, which saves the fossil fuel resources; especially, the component of lignin that is produced in a simply way and has the highest energy density in the biomass can be applied to the combustion with stability and reliability.
2. The problem of combustible solid powder's rapid and natural sinking in the liquid fuel is solved by machine stir, etc., avoiding deposition because of solid components in the oil circuit; with solid powder more than 25v% and small amount of liquid in the fuel mixture that causes to be incapable of its natural flow, the fuel mixture is injected into the cylinder or the combustion chamber in the engine for burning in ways of screw conveying and being carried by proceeding pure high-pressure liquid fuel.
3. The problem solved is that the fuel mixture containing combustible solid particles such as lignin or biomass tends to absorb water so that it can't be used as normal during the production and work.
4. The problem solved is that particles of tiny size are hard to be obtained from the fuel containing lignin or biomass because of condensation.
5. Economical production of fuel mixture is realized, and in this production (as directly mixing with fuel after acidification) removing water introduced, fining the solid particles grind and condensation-stabilizing the particles are realized as well.
6. Appropriate methods of transportation and injection make it easier and more reliable for the fuel mixture to be transmitted to the cylinder of the combustion to burn, and simple methods of transportation make the fuel mixture with components having different proportion or stratified move from tanks to the oil circuit constantly.

### Brief Description of the Drawings

Fig. 1 is a schematic drawing of a transmitting system of the fuel mixture provided by embodiment 12;
Fig. 2 is a schematic drawing of an outlet valve connected with an injector;
Fig. 3 is a schematic drawing of an outlet device for constantly outputting the fuel mixture;
Fig. 4 is a schematic drawing of one embodiment of the outlet device for constantly outputting the fuel mixture as shown in Fig. 3;
Fig.5 is a side view of the outlet device for constantly outputting the fuel mixture as shown in Fig. 4;
Fig. 6 is a schematic drawing of one embodiment of the outlet device for constantly outputting the fuel mixture;
Fig. 7 is a schematic drawing of a filter basket disposed in front of a plunger;
Fig. 8 is another schematic drawing of the filter basket as shown in Fig. 7;
Fig. 9 is a schematic drawing of another embodiment of the filter basket disposed in front of the plunger;
Fig. 10 is another schematic drawing of the filter basket as shown in Fig. 9;
Fig. 11 is a schematic drawing of a plunger provided by embodiment 16;
Fig. 12 is a schematic drawing of another plunger provided by embodiment 16;
Fig. 13 is a schematic drawing of a plunger with a symmetrical structure;
Fig. 14 is a schematic drawing of a plunger provided by embodiment 17;
Fig. 15 is a schematic drawing of a plunger provided by embodiment 18;
Fig. 16 is a schematic drawing showing connection of a needle valve of the injector and an electromagnetic driving device.

### Detail Description of the Invention

### Embodiment 1:

At normal temperature and pressure, add 80g of alkaline lignin (provided by Xinyi Jingwei Science & Technology Co,. Ltd, main specifications: appearance: tan (brown) powder, insoluble-matter content ≤1.5wt%, pH of 8-10, water content≤ 7.0%, fineness: 80-mesh of pass rate≥95%, that is, the largest diameter of the particle is 178 µ m and the average diameter is 150 µ m ) into 450g of commercial diesel 10# (the solidifying point of the diesel is 10°C) to form suspension for mixed fuel ( the weight content of weight of lignin is about 15wt%, and the volume content of volume is 9.5v%); pour 530g of the mixed fuel into the tank of four-stroke R170 diesel engine with single cylinder and pintle injector of sing hole (noted: the fuel filter at the output of the tank should be removed so that lignin of particles can pass through the pipes with the fuel ), and the engine can run for 65 minutes in an unloaded state without loads until the oil left in the tanks is not enough to supply, but running the engine repeatedly forces it to stop working since the lignin tends to absorb water, which results in caking.

Increase the content of lignin. When applying the mixture of 120g lignin and 280g diesel (the content of weight of lignin is 30%, thus, the content of volume is about 20v%, calculated by the average proportion of 1.4/cm3) to the engine, the engine is hard to start and easy to flame out during running. The fuel in the tank should be stirred by hand or by an electric fan-shape stirrer at 100-3,000 revolutions per minute, preferably, 500-1,000 revolutions per minute. Otherwise, the engine will easily flame out because of oil circuit blocking, or poor oil leads to flameout. In spite of these, the engine runs in off-and-on state. It shows that the main cause of the limited lignin is the difficulty of lignin to pass through the oil circuit, the fuel pump, and the injector. The following embodiment provides a technical solution of lignin modification and engine improvement to increase the content of the lignin.

When the engine is at work, the mixed fuel in the tank first goes into a feeding device or a feeding container fixed on the engine, the bottom of which is a funnel and the output of the funnel is connected with an input pipe. The diameter of the top of the container is no more than 10cm, which ensures the height of the mixed fuel no more than 15cm, so that the mixing process is stable although even if the mixed fuel bounces at the funnel and forms a column because of the fluctuation of engine's vibration or of inner-pressure in the pipes.

The mixed fuel with lignin whose content range is from 0.1% to 90% can be applied to the engine, however, considering the convenience of transporting, the modification of the engine system to minimal degree should be minimized, and the substitution for fossil fuel as much as possible, to economically solve the problem of non-renewable fossil fuel, the optimum volume range of commercial lignin is between 0.1v% and 20v% (but the optimum range of lignin acidified or condensate-stabilized is between 0.1v% and 25v%, referring to the following embodiment ). If just considering the substitution for fossil fuel to the most extent and the avoidance of dust by powder fuel, rather than the trouble and cost of the improved design of the engine structure, the optimum volume range of lignin is less than 85v% (of the mixed fuel), or preferably the largest content is 50v% to ensure the gasoline engine's normal ignition, or most preferably the largest content is 25v% to keep the mixed fuel flow. Spray combustion of solid powder in high content carried into the cylinder or the chamber is realized by the method (as referring to embodiment 12) of harnessing proceeding pure high-pressure fuel, which is provided in the present invention.

### Embodiment 2:

Dry and dehydrate the alkaline lignin of embodiment 1 (or acid lignin powder that is obtained from the sawdust powder soaked in the sulfuric acid solution with 70% concentration at normal temperature and pressure for half year, and the cellulose and the hemicellulose of the sawdust powder are dissolved, and removed after wash and dehydration process, since the particles of acid lignin powder are large and coarse, the acid lignin needs to be processed and grind to supply power for engines stably for a long while) by a blast oven at the temperature of 105°C for ten minutes (if the drying temperature is over 110°C, products of lignin, part of which has been pyrolysed at low temperature or carbonized, are obtained ), after 10 minutes, then pour it into a measuring bottle containing 450ml of diesel 10# gradually when under stirring until the height of the mixture reaches the calibration of 500ml, and a mixture of lignin and diesel (the volume content of lignin is 10%) is obtained as a sample used for quantitative detection of diesel substituted by lignin powder for efficiency and emission. Pour the mixture of lignin and diesel into a colloid mill and grind it for 10 minutes to obtain the lignin particles decrease with the average diameter of lignin particles to 50 µm, then pour it into the tank of Changdong Brand R180 diesel engine with 8P power (and the fuel filter removed) produced by Jiangsu Changxin Diesel Engine Co., Ltd. A pumping test is made, that is, 15m3 of water of 15m3 is pumped after 33 minutes by the using a pump with 3KW driving power on the diesel engine, and measure the remained oil in the tank, and 440ml of mixing oil of lignin and diesel is consumed, that is, 396ml of pure oil and 44ml of lignin are respectively consumed. As comparison, another pumping test is made on commercial diesel 10# under same conditions, that is, 15m3 of water of 15m3 is pumped after 35 minutes and by measuring 420ml of pure oil is consumed. It can be drawn by comparison that 24ml of pure diesel is saved while 44ml of lignin consumed, which shows that lignin has output mechanical work output while beingen burneding, thus, 44ml of lignin substitutes 24ml of diesel to dooutput mechanical work.

Applied to the same kind of engines running in an unloaded state without loads, the Bosch smoke value for pure diesel is 1.5RB, while for the mixture containing 10v% of lignin and diesel only 0.4RB, and other smoke components have no apparent differences; it shows that lignin molecule that has high oxygen content of 30% helps contributes to lignin and diesel's to do complete burning in the cylinder, thus, lignin has two functions, one of which is that it can be used as fuel, and the other is that it can also be used as fuel additives to improve the combustion effect. It should be noted that after entering into the cylinder, if the temperature inside the cylinder is over 350°C, the combustible solid powder, such as lignin, biomass powder, etc. will be pyrolysed instantly, and the pyrolysis products are low molecular weight solid carbons in micrometer or nanometer size solid carbon, combustible gas, and bio-oil, etc., of micrometer or nanometer size that and these pyrolysis products are tend to be more combustible than the combustible solid powder itself as lignin, which results in gasification combustion. In fact, if nitrification products asof lignin, total biomass and so onetc. are able to have pyrolysis and gasification combustion at high temperature, all of them can be mixed with liquid fuel as mixed fuel for combustion engine. Since the above lignin can have gasification and combustion at high temperature (as 350°C), specific tests and applications will not be explained.

However, after running for long time (as more than half an hour), especially under a moisture condition with moisture, lignin will be adhesive after absorbing or adsorbing water from the air so that the engine can't supply oil and stops working., tThus, modification of unprocessed commercial lignin unprocessed or solid biomass powder as the lignin mentioned above, such as acidification and/or condensate-stabilization treatment, can make them better used as fuel or fuel additives in actual use.

### Embodiment 3:

The condensate-stabilized acid lignin, obtained by purifying and modifying the alkaline lignin or other above-mentioned lignin, with impurities removed, can overcome the defects of water-absorbing in use; decrease the lignin particle size, and avoid oil circuit block and engine flameout caused by water absorption of the ordinary lignin in use. At room temperature and pressure, taking alkaline lignin for example, dissolve 100ml of lignin into 500ml of water, and obtain lignin solution (or directly adopt pulp mill wastewater containing lignin dissolved as the lignin solution); then neutralize the lignin solution using inorganic-acid solution with mass percentage concentration of 10w%(such as hydrochloric acid, sulfuric acid, or nitric acid, or carbonate formed by carbon dioxide dissolved in the water)until the pH value of the lignin solution is less than 4, preferably less than 3, after that a mixture containing water, acid lignin, salts, and acid remained is obtained. After lignin completely deposits in colloid (generally taking 5-10 hours), take out the mixing solution while the dregs at the bottom of the container is removed, then sieve it to filter out water and salts by a 400-mesh nylon sieve and then wash it with water; after repeating filtering and washing steps for 3 times, acid lignin slurry with a water content of 60% is obtained, then conduct spray drying process for the acid lignin slurry (the air temperature for drying is 200°C), and tiny particles of lignin (acid lignin) are obtained, then measure it and mix it with fuel;
or put the acid lignin slurry with water into an electric oven, after blast-drying at the temperature of 105 °C for 2 hours, lump acid lignin is obtained; put 50g of the lump acid lignin above (or further add 10g of the condensate-stabilized total biomass powder obtained from the embodiment 9) into 500g of diesel, mill it by a colloid mill for 10 minutes until the particle diameter is about µm, then grind it by a high-frequency vibration grinding machine, and a mixture of tiny acid lignin particles with diameter of about µm (or also containing condensate-stabilized total biomass powder) and diesel is obtained, then measure the mixed fuel. It will effectively prevent the tiny lignin particles from absorbing water or impurities in the air which will result in caking to grind the block lignin, biomass powder and diesel after mixing them together.

To reduce the water content in the mixed fuel and obtain tiny acid lignin particles, directly add 100g of the above-mentioned acid lignin slurry containing water into 500g of diesel, distill and dehydrate them for 1 hour at the temperature of 105 °C, in the meantime, stir, shear, and grind them by a high shear emulsifier or ultrasonic wave, finally obtain the mixed fuel of micro acid lignin particles without water and diesel ( the average diameter of lignin particle is 4.7µm, and the largest is 11µm), then measure it and mix it with diesel for the engine use.

In order to realize continuous production, a number of technical solutions as follows could be adopted in the preparation process:
(1) the low boiling components of the diesel distilled with water flows back into the mixed fuel after being condensed and separated from water; or
(2) bring out the mixture of hot oil and lignin particle circularly from the bottom of the bottom of the oil container during dehydration, then filter the mixture containing hot oil and lignin particles to separate the acid lignin from the hot oil, and then introduce the separated hot oil back into the oil container.

Furthermore, adding anthraquinone or anthraquinones (preferably added when lignin has been dissolved in the water, or added directly into the paper-making waste water; the melting point of anthraquinone is as high as 286°C, and the melting point of 2-naphthol is as high as 123-124°C, so that they can be distributed in the solution during the grinding process; anthraquinones with low melting points, such as naphthalene having a melting point of 80.3 °C or 1-naphthol having a melting point of 96°C, can be distributed in the hot solution during the distillation and dehydration process by stirring and shearing) can make micro acid lignin particles as cloudy in the liquid fuel, when gently shaking the container of the mixed fuel, the lignin will rapidly flow and uniformly be distributed, which makes the mixed fuel containing lignin easier for actual use; the average diameters of lignin particle obtained are less than 1 µm, and the largest diameter is 8µm. In contrast, it is difficult to obtain the lignin particles having a diameter of less than 5µm just adopting normal mechanical grinding process. Moreover, the lignin particles obtained by general mechanical grinding process has a wide diameter range, with the largest diameter up to 19µm. The specific operation is as follows: firstly add anthraquinone, 2 - naphthoquinone, naphthalene or other chemicals (0.001-0.07% by weight of the lignin) into the lignin solution (since some chemicals of anthraquinones is hard to dissolve in the water, the optimum solution is grinding and smashing the anthraquinones to make them dissolved in the water or oil at first); then pour the liquid fuel containing anthraquinones, after quantification, into the lignin solution under stirring; after that, proceed the lignin acidification or pickling treatment. Chemicals of anthraquinones is naphthalene, methyl anthraquinone, hydroquinone, quinone, phenanthrene quinone, naphthoquinone, anthrone, quinone diol, naphthalene diol, phenanthrene diol, or the alkyl, alkoxy, hydroxyl, amino, carboxyl derivatives thereof, or the salts thereof, the precursors and the tautomers thereof, and the like; all of the above-mentioned chemicals which have similar influences on the condensation of lignin as anthraquinone, 2 - naphthoquinone, or naphthalene could be used as the substitute of anthraquinone, 2 - naphthoquinone, or naphthalene.

It is found that if exposed in the air or mixed with the liquid fuel for a long time (such as two weeks), the acid lignin obtained from drying or distillation at the temperature of no higher than 105 °C or the acid lignin obtained from spray drying at the temperature of no higher than 200 °C will sink at the bottom of the container and adhere to each other to form larger particles (for example, particles with a diameter of 50µm appear among the particles with an average diameter of 1µm around), which shows the acid lignin absorbs water or the surfaces of the particles adsorb water, so that the particles adhere to each other and grow into large particles (the shortcoming of larger particles is the mixed fuel tends to block the oil circuit, which leads to the engine's failure of normal operation). To prevent fined acid lignin from condensation-growth after being grinded, especially to prevent the condensation-growth after long-time storage or after water absorption, the drying temperature should be preferably increased to more than 105 °C, preferably not lower than 110°C, more preferably, between 130-250°C, when the drying temperature is generally lower than 300°C, the distillation temperature is increased to 110-150°C, preferably to 120-140°C, so that the acid lignin can be condensate-stabilized after being heated, or preferably in the late stage of drying and distillation the temperature is increased to 130 °C and maintain the temperature for 30 minutes, or preferably the temperature of spray drying is selected from 200°Cto 350°C, more preferably between 250-300°C. It is also found that for the acid lignin condensate-stabilized at high temperature, even disclosed in the air or mixed with fuel for 2 months, no apparent particle-growth occurs and the acid lignin doesn't adhere to each other at the bottom of the opening container because it is condensate-stabilized, thus, condensate-stabilized acid lignin have better characteristics for use. The acid lignin obtained by drying at low temperature (no higher than 105°C) is not condensate-stabilized, and its appearance is brown sauce or dark brown in color when mixed with diesel, but it still can absorb water or adsorb water on its surface, and tends to form in colloid-shape in the fuel after water-absorption. When the acid lignin obtained after high-temperature heating and drying, its appearance is brown black or partial black in color when mixed with diesel, the large particles have metallic luster, tend to be broken and become smaller ones. It is also found that it is easy to obtain a mixture of condensate-stabilized acid lignin in tiny powder-shape or cloud-shape and liquid fuel by drying acid lignin in the liquid fuel at high temperature, perhaps because of the surface adsorption reaction between the hydrocarbons in the liquid fuel and the acid lignin which will facilitate the condensate-stabilization of the acid lignin.

Since the acid lignin obtained at different temperature has its own characteristic, in the present invention, generally, the term "acid lignin" refers to the lignin obtained by acidification and drying under 105°C or spray drying under 200°C, while the term "condensate-stabilized acid lignin" refers to the lignin obtained by acidification and drying over 105°C or spray drying over 200°C. Moreover, lignin is a kind of complex polymer whose pattern and natural characters relate to its source, separation method and molecular weight. Thus, the condensate-stabilization conditions and temperature ranges of the lignin having different sources will probably differ. It is found by comparison experiments that grinding the mixture of acid lignin particles obtained from low-temperature drying and water can result in a viscous mixture, while grinding the mixture of condensate-stabilized acid lignin particles obtained from high-temperature drying and water can result in smaller lignin particles of brown black or partial black that are distributed in the water, showing condensate-stabilized lignin are more hydrophobic.

### Embodiment 4:

Mix 500ml of absolute ethanol and 200g of the commercial lignin of embodiment 1, keep the mixture still for 24 hours to obtain ethanol solution with lignin dissolved, and then mix 100ml of this ethanol solution with lignin dissolved and the inorganic acid solution mentioned in embodiment 3 (or firstly remove the ethanol in the solution by evaporation, then mix the solution with the inorganic acid solution), stir and shear the mixture, and after that precipitates of acid lignin are obtained; then the mixed fuel which could be stably applied in the engine is prepared after proceeding the same treatment as in embodiment 3, such as grinding, distillation and drying, to the acid lignin precipitates.

### Embodiment 5

A preparation method of mixed fuel is provided in this embodiment. Inject the acid lignin slurry or the mixture of acid lignin, diesel and water in embodiment 3 (or further add the condensate-stabilized total biomass powder of embodiment 9) into the surface of the hot liquid fuel oil, such as diesel, or into the inside of the hot liquid fuel oil by nozzle spraying, dynamically distilling and drying it, and maintain the temperature between 110-120 °C (the acid lignin can have polymerization and condensation reaction at the maintained temperature instantly to easily get micro fuel particles); a shear emulsifying device with stirring function (such as a high shear emulsifier) is configured in the tank of fuel oil and the volume of the fuel oil is 5L or 10L. Spray the acid lignin with a little water ( or containing condensate-stabilized total biomass powder as well) and/or its mixture with oil into the hot liquid fuel; the nozzle sprays above the hot oil or immerse it; Removing just a little water per unit time (for example, spray about 5L of the mixture per hour) can inhibit the formation of lots of water vapor bubbles or explosive upwelling of boiling bubbles happened during the distillation and dehydration process in embodiment 3, , and it could inhibit the troubles caused by the bubbles as well, then acid lignin particles having an average diameter of less than 1µm are obtained (measured by an optical microscope, 80% of the acid lignin particles obtained after high-temperature heating and condensate-stabilization have a diameter of less than 1µm, and the largest diameter is about 8µm ). Remove parts of the liquid fuel by filtration or precipitation separation to get mixed fuel with different contents of acid lignin. It is expected that smaller acid lignin particles obtained after high-temperature heating and condensate-stabilization treatment (such as the tiny particles having a diameter of about or even less than 100 nanometer, prepared by this method) have better transportability and higher mixing stability; and moreover, in this situation, the mechanical stirring devices for mixing the fuel are not needed any more,, or just a plurality of parallel inputs of embodiment 13 configured are enough to realize constant transport.

The problem of water removal also exists during the nitrification process of lignin, cellulose, hemi-cellulose, or total biomass. For example, after completion of the nitrification process in the aqueous solution which is followed by preliminary deacidification process, preliminary dehydration process and mixing the nitrification products which contain small content of water with the liquid fuel directly, water in the mixture should be removed according to the above-mentioned dehydration method.

The above method which includes the steps of dehydration by distilling and drying after mixing the acid lignin slurry containing water and the liquid fuel together or by spraying the mixture into the hot liquid fuel oil can shorten the manufacturing process, since tiny acid lignin particles are easy to obtain in the acid solution, they can be transferred from "aqueous solution" to the liquid fuel, avoiding the process of solidifying acid lignin and crushing it into small particles, not only saving production cost, but also avoiding the initial tiny lignin particles from becoming large ones having a diameter of tens or hundreds of micrometer because of charge and mechanical action after the previous drying, and also avoiding tiny, dry, and solid particles with large surface area from adsorbing water from air for the second time prior to being added into fuel oil. Thus, the above method of transferring is easier to obtain tiny acid lignin particles mixed with liquid fuel. Additionally, other additives which might contribute to optimizing performance of the mixed fuel could be further added into the mixed fuel to make it more suitable to be applied to the engine system. Moreover, other liquid fuel, such as bio-diesel or absolute ethanol could be added into the mixed fuel as well. Same engine operation experiment is conducted on acid lignin particles obtained from condensate-stabilization; by gradually increasing the volume content of condensate-stabilized acid lignin particles, the engine, without loads initially, begins obvious unstable operation until the volume content reaches 30v% (equivalent to the weight content of about 43wt% ) and tends to stop running, showing that additional content of the improved condensate-stabilized acid lignin can be increased without changing the structure of the engine, since the condensate-stabilized acid lignin particles float and are mixed in the liquid fuel uniformly and cloudily, besides the vibration of the engine itself, mechanical stirring can be added at intervals, for example, conducting stirring or shaking once every one minute.

### Embodiment 6

As the most economical and simple technical solution according to embodiment 3, drain the acid lignin slurry obtained (granule particles with diameter below the magnitude of micrometer or of the magnitude of nanometer ) to remove water at normal temperature and pressure (eg. centrifuged filter it at high speed to remove water); take 10ml, 20ml, 30ml, 40ml, 50ml, 60ml, 70ml, 80ml and 85ml of the acid lignin (still containing slight water) respectively, then mix each group of the acid lignin with diesel to prepare for the mixed fuel which having a total volume of 100ml, stir and shear it at high speed, after that obtain a series of colloidal mixed fuels having respect acid lignin volume content (including slight water) of 10v%, 20v%, 30v%, 40v%, 50v%, 60v%, 70v%, 80v and 85v%.

The colloid is formed because of two reasons, one reason is the acid lignin particles have a diameter on the scale of nanometer, another reason is the slight water contained in the lignin, but not because of the acid lignin dissolved in the liquid fuel or water. The acid lignin of the present embodiment is formed during the neutralization in the solution, thus, by decreasing spraying droplet diameter or narrowing the contacting area between the acid droplet and the lignin solution, the lignin particles growth will be limited and the lignin of nano-size will be prepared, thus forming a stable colloidal mixing solution of lignin and fuel oil (noted: the colloid is a dispersion system containing the dispersed particles having a diameter of between 1nm-100nm; the colloid is a high-dispersed, heterogeneous and uneven dispersion system which contains the dispersed particles having a diameter size between the coarse dispersion and solution). Thus, the method for preparing a mixture containing the micro-size or nano-size lignin powder dispersed in the liquid fuel in this embodiment is simple and feasible. Since the mixed fuel contains slight water, after removing water, according to the technical solution in the art, adding slight surfactant that can be disolved in both oil and water could make the colloidal solution more stable.

As an example, apply the colloidal mixed fuel with the volume content of about 10v%, 20v%, or 30v% to the R180 diesel engine of 8P power without loading: invert a cylindrical plastic bottle (with a diameter of 6.5cm and a height of 15cm, that is, a funnel-like feeding device), seal the narrow bottle opening with the inlet of the diesel engine fuel pump simulating the real tank containing mixed fuel to supply oil, then pour 20ml of pure diesel to start the engine and after that pour 100ml of the mixed fuel through another opening at the bottom of the bottle. To enable the colloidal mixed fuel continuously and stably flowing into the fuel pump, pumping air into the bottle by an air compressor or completely cut the bottom of the bottle and pressure the mixed fuel by a piston having a diameter of 6.5cm (such as the plunger inside the fuel injection pump, and the piston and the bottle body are tight coupled with each other to pressure the piston as well as the mixed fuel ) so that the colloidal mixed fuel is pressed into the inlet of the fuel pump. It is found that the engine can operate, without any mechanical vibration or stirring, however, unstable operation or unexpected halts will occur sometimes, thus, the structure of the engine needs to be improved for using the mixed fuel.

Additionally, slight water contained in the colloidal mixed fuel can also be removed according to the method in embodiment 3 and embodiment 5.

### Embodiment 7:

According to the embodiment 6, firstly add nitrate solution with weight concentration of 10% (or sulfuric acid solution, hydrochloric acid solution) into the lignin solution (lignin solution obtained by dispersing 20g, 50g, or 100g of lignin respectively in 500ml of water) so that the mixed solution of pH below or equal to 6, preferably below 4, is obtained, or, to neutralize by the acid uniformly and obtain products containing tiny acid lignin particles (if being neutralized solution is from pulp wastewater or paper-making black waste water, there might be other combustible organic matters that can be dissolved in organic solvents such as resin, fat, wax, etc. and inorganic ash that is difficult to dissolve in organic solvents such as silicate in the lignin solution, but all the organic matters in the present invention that are dissolved in the fuel are termed 'acid lignin' as a part of the mixed fuel ), pour or nozzle spraying nitrate solution into lignin solution under stirring, shearing at the same time (which is realized by a stir shear emulsifier so that the mixed solution maintains flowing and solid particles are continuously broken, for purpose of preventing solid particles from depositing and gathering with each other to grow bigger), a mixture of flocculent acid lignin ( colloidal particles having a diameter of under micrometer size or of nanometer size) and nitrate solution is obtained; add 10ml to 500ml of commercial diesel 10# (or other organic solvents) into the mixture, completely stir, shear and emulsify the mixture, keep the mixture for 1 to 12 hours so that the acid lignin is completely entering into the upper layer, such as the diesel layer or the mixed liquid layer containing diesel, water and lignin. At this time, the mixed solution has apparent layers, that is, from the bottom up, aqueous layer (containing organic or inorganic matters dissolved in water, and inorganic matters depositing in water, etc.); first mixing layer containing water, flocculent acid lignin and oil; second mixing layer containing oil, flocculent or colloidal acid lignin and slight water; and/or oil layer (appearing when large oil magnitude added) are arranged. The interface between neighboring phases might be not obvious, may be due to the effects of pH value of the solution or the amount of the solvents added. It is found that only after complete stir, shear and emulsification, the acid lignin could be carried by oil droplets into the upper phase of the solution. The lower the pH value of the mixed solution is, the faster the solution becomes stratified, however, lower pH value means much more acid consumption which is not economical. The water in the mixed solution precipitates from the oil phase and flows to the bottom of the container, and the lipophilic acid lignin, even soaked by little organic solvent, could still be carried by oil droplets to float up or be extracted into the diesel or the mixed liquid containing diesel, lignin and water. Therefore, it will have the same effect to add diesel, gasoline, heavy oil or other organic solvents, such as petroleum ether of 60-90°C or chloroform into lignin solution before acidification, or into the solution during the acidification process, or after the acidification. Although the "extracted" acid lignin doesn't mean the lignin is really dissolved and mixed in the diesel or the organic solution to form general extraction solution, the word "extraction" is still used in the present invention. During the acidification process for removing the lignin contained in the paper-making wastewater, pure lignin products can be obtained after removing diesel by filtering or heat-volatilizing process. In order to obtain pure acid lignin products, the temperature and heat consumption in the distillation process could be reduced by using low boiling-point or other insoluble organic solvents with low boiling-point instead of diesel. Then mix the acid lignin products with fuel to obtain mixed fuel. Pump or release water phase (layer) at the bottom of the container, or further remove the remained water as much as possible by filtering or ion exchange membrane process. In the end, three different kinds of emulsified colloidal mixed fuel containing acid lignin (remained water included) which respectively have weight contents of 5wt%, 12wt% and 25wt% (corresponding volume contents of 3v%, 7v% and 16v%) and diesel (remained water included), or the mixtures containing lignin and organic solution as intermediate industrial products are obtained.

The method of "extracting" lignin from the solution according to the present invention not only produces the mixed fuel or the mixture containing tiny lignin particles, but also provides a simple and effective method to remove or extract the lignin, especially from the paper-making waste water. Moreover, the method provided in this invention is capable of solving the problem in prior art, for example, it is usually very difficult to dehydrate during the lignin solution acidification process which is aimed to remove the lignin, however, this problem could be easily resolved by the method in the present invention. Furthermore, the present invention also provide a technical solution which could simplify the treating process of black waste water produced in paper-making factory by using organic solvents (such as diesel, gasoline, petroleum ether or chloroform) to remove lignin by "extraction" method.

### Embodiment 8:

Mix cloudy acid lignin obtained from the embodiment 3 and 5 with pure commercial gasoline 93# with weight ratio of 1:9 (lignin : gasoline) to prepare the mixed fuel to drive Chang'an SC1010X gasoline car produced by Chongqing Chang'an Automobile Company Ltd. Firstly, dispose a propeller-like stirrer in the tank, imitate a vibration of engine on rough roads, and the car stops after about 20-minute operation, showing that the pump or the atomizer in the oil circuit has been blocked. It shows that acid lignin can also be applied to gasoline engines as well as diesel engines. To increase the possibilities of substitution for gasoline, the engine structure should be improved.

For gasoline engines of carburetor, high content of acid lignin powder or biomass-based fuel in the carburetor could be easily be apart from air and thus deposit. Therefore, the optimum volume content of fuel powder is less than 5v%, preferably, around 3v%; however, for the direct injection gasoline engines, gasoline injected into the cylinder should have a certain concentration to combust, thus, preferably, the volume content of fuel powder is no more than 50v%, and to make transport and operation available in the oil circuit, the optimum volume content is less than 25v%.

### Embodiment 9

The process above on lignin, such as acidification, addition of anthraquinone or anthraquinones, and lignin condensation by heating at high temperature, all produce similar effects on total biomass material or other components thereof, and such effects including avoiding water-absorption to obtain tiny biomass particles.

In this embodiment, firstly put biomass materials such as dried broken sawdust (or chopped bamboo, wheat straw, rapeseed stalk, cotton stalk, pine pieces, shell, algae) produced during the process of trees in a blast oven, blow, dry it to remove water at the temperature of 120°Cor over 120°C for 3 hours (it depends on different biomass, and the drying time is determined by no water overflows from the biomass), and condensate-stabilized biomass materials are obtained. It is found that biomass powder obtained by drying and condensation below or at 120°C has not been completely condensate-stabilized yet, since these tiny biomass particles have great surface areas, when mixed with fuel and exposed in the air for long time (as for one day), water-swelling and particle-adherence occur (the longer the obvious), thus the drying temperature should be increased to obtain condensate-stabilized biomass materials, as 130°C, 150°C, 200°C, 250°C, or 300 °C, (noted: when the temperature is over 250 °C, partial oxidation and carbonization occur in the biomass because it exposed itself in the hot air of the furnace for long time, but condensate-stabilized biomass of partial carbonization can still be obtained for the fuel of engines), and only after proceeding refined process the condensate-stabilized biomass materials can be used as qualified combustion fuel in practice (the drying and dehydrating temperature is preferably between 120-300°C, and the optimum range is between 130-250°C), that is, unstable combustion operation will not happen because of biomass powder of water-absorption, water-swelling, or particle-adherence. Put condensate-stabilized biomass materials into fuel (as diesel 10#, and 50g dried biomass mixed with 500ml fuel) for coarse grind by a colloid mill for ten minutes, grind it to pieces for 10 minutes to obtain its particle diameter of about 50µm, then further grind it to obtain its particle diameter of about 10µm by a high-frequency vibration grinding machine; to further decrease water, distill and dehydrate the mixture of the treated biomass materials and fuel for 30 minutes at the temperature of 105-150°C (preferably at the temperature of 120-130°C to realize condensate-stabilization of the lignin components of biomass) with stirring and shearing, and fuel mixture of fuel and tiny condensate-stabilized biomass material powder (as sawdust powder, bamboo powder) is obtained. Then, by increasing or filtering to lower the (liquid) content of the fuel, solid particles of required content is obtained. Add the condensate-stabilized biomass powder whose content is 10%, 20%, or 50% etc. of weight content of lignin into the fuel mixture of liquid fuel and tiny acidified lignin powder of the embodiment 3 and embodiment 5, since spaces exist between each other, polymerization of lignin or total biomass particles is avoided, which becomes easier for solids and liquid of the fuel mixture to mix with each other uniformly.

The test of R180 engine shows that total biomass bamboo materials (or sawdust, wheat straw, rapeseed stalk, cotton stalk, pine pieces, shell etc.) is dried and condensate-stabilized for 3 hours at 130°C, and ground for 30 minutes by a colloidal mill into pieces of diameter of 50µm or so, and further ground by a high-frequency vibration ball mill into pieces of diameter of under 5µm, at last the weight content of the total biomass powder is 1v%, 5v%, 10v% or 25v% of the fuel mixture obtained by mixing with diesel and can substitute for diesel to do work and lower emission as well as the fuel mixture of lignin powder and diesel of the above embodiment.

### Embodiment 10:

Similarly, lignin nitrate, cellulose nitrate etc. can substitute for lignin to mix with liquid fuel as gasoline, diesel etc. to prepare fuel mixture, however, in order to prevent nitration from friction ignition and make it available to be transported in the oil circuit, it should be completely immersed and mixed with fuel, and its volume content is generally not more than 75% of fuel mixture. According to the current technology, besides cellulose nitrate and lignin nitrate, total biomass is nitrated to obtain other nitrated products such as nitrated starch, nitrated fat, nitrated hemicellulose, nitrated coniferyl alcohol, nitrated shell sugar, nitrated colloid, and to substitute for lignin to mix with fuel to prepare the fuel mixture to drive engines. Mix small amount of nitrated products whose volume content is 5v% of total fuel mixture with the acidified lignin powder and/or condensate-stabilized total biomass powder, then further mix with liquid fuel to obtain fuel mixture which has better mixing fluidity and better performance of combustion in the engine cylinder.

### Embodiment 11

It is found that when mixing lignin or acidified lignin with absolute ethanol, especially having absorbed water after long-time storage, the lignin tends to dissolve and cause to form viscous large colloidal, thus, it is not suitable to be used as the fuel mixture of engines; but condensate-stabilized bamboo powder or other biomass powder can be mechanical-stirred with absolute ethanol to obtain stable and uniform mixtures to use as fuel mixture, or mixed with other fuel of any volume (5%-85%) to obtain fuel mixture used in combustions or gas turbines.

### Embodiment 12:

In many of current combustion structures, fuel is pumped from a tank by a fuel-transmitting pump (optional configured) at a low output pressure into a fuel-injecting pump of high output pressure, then the fuel is transmitted into an injector with an increased pressure by the fuel pump, finally the fuel is sprayed and injected (the injector is also a fuel atomizer) into the cylinder to combust to provide power. The tank, the fuel-transmitting pump, the fuel-injecting pump and the injector are interconnected by pipes.

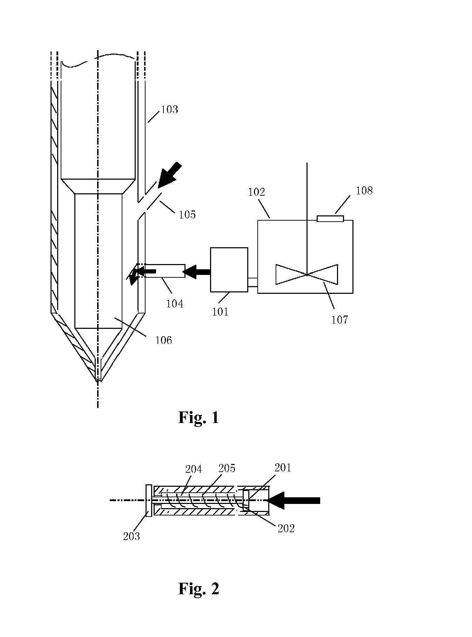

In order to make the fuel containing solid powder available for the engine, the embodiment provides an improved engine with two tanks configured, one of which is a conventional tank supplying regular pure fuel, such as gasoline, diesel etc., and the other one contains a fuel mixture containing lignin or other combustible solid powder and liquid fuel, such as gasoline, diesel etc. Each tank disposes a fuel-injecting pump respectively and injects fuel by a respective injector into the same cylinder, or the tanks dispose two fuel-injecting pumps respectively but with one injector shared, or the tanks share one fuel-injecting pump and one injector, realizing dynamic cleaning by pure fuel in the oil circuit at intervals. If the tanks share one fuel-injecting pump and one injector, the fuel from different tanks will pass a T-shape structure with control valves, then alternately go through one fuel-injecting pump and into the injector, which sprays and injects fuel into the combustion chamber, since the pure fuel alternately passes through the fuel-injecting pump and the injector with the fuel mixture, the pure fuel can clean the oil circuit. If the tanks dispose fuel-injecting pump respectively but share one injector, the injector is connected to the tanks by two fuel channels respectively. Fig.1 is a schematic drawing of a transmitting system of the engine provided in the present embodiment. The engine has two tanks connected with the injector respectively; as shown in Fig.1, sub-tank 102 with an inlet 108 is connected to fuel-injecting pump 101 which is connected to the cavity of injector 103 by an outlet valve 104, and a needle valve 106 (the needle valve 106 can be replaced by an electromagnetic valve with current control in an electronic fuel injector system, and the valve is at the front end of the needle valve ) and a pure fuel inlet 105 joining the tank (not shown) are disposed inside the cavity of the injector 103, wherein, inside the tank 102 disposes a stirrer 107 or a circulating pump immersed in the fuel (or assembled outside the tank 102) for keeping the fuel mixture circulating and flowing, or the tank 102 is sealed after adding fuel mixture, by a compressing device of a compressor to input air or by a piston-pushing device having tight coupling and close contact with the tank 102 (preferably with a cylinder cavity) at a constant pressure, compressing and pushing the fuel mixture (or colloid fuel mixture ) at a determined pressure (as 1.5 or 2-5 atmospheric pressure) into the inlet (not shown) of the fuel-injecting pump 101.

The fuel-injecting pump 101 works, and with the outlet valve 104 of the injector 103 opening, the fuel mixture containing solid powder fuel and liquid fuel is pumped or screw-propelled from the tank 102 to the cavity of the injector 103 according to the arrow direction; based on the requirements of contents of lignin or solid powder injected into the cylinder (within the volume range of 0.1-85% or so), pure fuel and fuel mixture of corresponding volume (that is, it should be taken into account that the content of solid powder fuel entering the engine in practice is changed with the input fuel from the pure-fuel tank, eg. to obtain fuel mixture with actual lignin volume content of 10% that enters the cylinder, the fuel mixture, whose volume content of lignin is 30% and that of diesel is 70%, is transmitted by the fuel-injecting pump 101 with one portion while the pure fuel with 2.3 portions) are pumped by a metering pump (not shown). After the fuel mixture is injected into the cavity of the injector 103, the pressure of the cavity of the outlet valve 104 lowers, and the outlet valve 104 automatically closes. Since the cavity pressure of the injector 103 dramatically decreases after it completes injection, fuel can be pumped although the fuel-injecting pump 101 is not at high pressure, and wear on mixed-fuel pump because of powder decreases with low pressure. After injecting fuel mixture (or stop the injecting fuel mixture for a period of time), pure liquid fuel stored in the tank as pure gasoline or pure diesel etc. is pressured by a conventional high-pressure fuel-injecting pump from inlet 105 into the cavity of the injector 103 along the arrow direction as shown; when inner pressure of the cavity of the injector 103 reaches a predetermined value of intensity, based on traditional design of injectors, the needle valve 106 opens and starts to inject high-pressure (stratified) fuel mixture into the cylinder to combust homogeneously. When adopting fuel mixture containing solid powder with content of over 25v%, although the fuel mixture is incapable of flowing naturally with the decrease of its liquid content, it can also pass a feeding device with a screw pump to substitute for the outlet valve 104 (the device is a drive pulley that can drive screw-rotation and is connected directly or indirectly to the rotating shaft of the engine to obtain driving force); the device also disposes an inlet into which the fuel mixture can be transmitted from the fuel mixture tank, which is not shown, in such a way that the fuel mixture is transmitted with high content of solid powder and low fluidity and carried by proceeding pure high-pressure liquid fuel from the pure fuel inlet 105 to inject itself of large amount of solid powder into the cylinder to combust and do work.

The pure fuel (pure gasoline or pure diesel) inlet 105 is above the outlet of the outlet valve 104 so that pure fuel will clean the outlet valve 104 at the outlet when entering the cavity of the injector 103 to avoid blocking in the oil circuit. Since the specific gravity of powder is higher than that of fuel, the action point of gravity of powder or particles is at the bottom of the cavity of the injector 103; each time the injector works, the upper pure fuel cleans the bottom of the injector 103, inhibiting any of the powder mixed in the fuel existing on the surface of the needle valve 106 of the injector nozzle and its coupling surface, and inhibiting the mechanical wear between the needle valve 106 and its coupling surface, and preventing the block of injector nozzle.

Fig.2 is a schematic drawing of the outlet valve 104 connected with the injector 103. As shown in Fig.2, the outlet valve has an output sub-valve 203, a spring 205, and an input sub-valve 201, wherein the spring 205 is disposed in the cavity of the outlet valve 204, and one end of the spring is connected to the wall of the cavity while the other end connected to the input sub-valve 201, and an opening 202 for receiving the fuel is disposed on the input sub-valve 201 that is connected to the output sub-valve by a link. Of course, there are other similar control solutions to transmitting oil. When the top needle of the needle valve of the injector withdraws, the fuel-injecting pump starts transmitting and pressuring the fuel mixture by the control mechanism or the spring-pressure mechanism of the combustion; the fuel mixture passes the opening 202 (or other channels) of the input sub-valve 201 and enters the cavity 204, and the net pressure inside the cavity 204 applies to the right side of the output sub-valve 203, when the pressure exceeds a predetermined strength of the spring 205, the output sub-valve 203 moves left so that the fuel mixture enters the injector cavity. The output sub-valve 203 is connected to the input sub-valve 201 by a link, and when fuel-injecting pump stops pressuring, the spring 205 forces the output sub-valve 203 closed with moving right. Since the fuel-injecting pump can work at low pressure, traditional fuel-injecting pump or fuel-transmitting fuel can pump the fuel mixture containing tiny particles.

### Embodiment 13

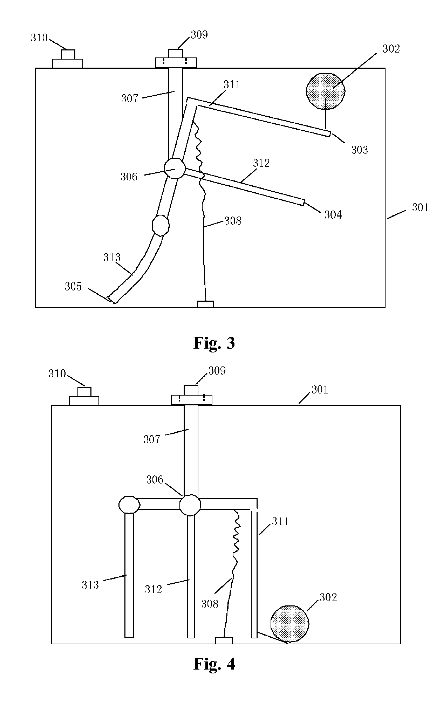

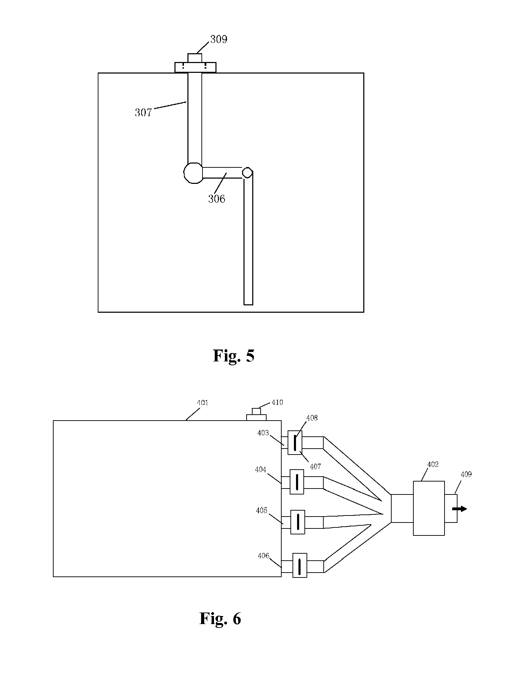

Immiscible components in the tank with different specific gravity have different concentration at different height because of gravity. To realize the oil transmitted into the fuel pipe with uniform components, a plurality of inlets are distributed at different liquid level (that is, a device for constantly transmitting the fuel mixture), instead of mechanical stirring or mechanical vibrating, to transmit components or stratified components with different specific gravity constantly into the fuel pipe, which is more stable and reliable than mechanical stirring. Fig.3 is a schematic drawing of an outlet device for constantly outputting the fuel mixture based on the present embodiment. As shown in Fig.3, an inlet 310 is disposed on the top of a tank 301, inside the tank 301 a fuel pipe 307 is fixed on the wall of the tank, the top of the fuel pipe 307 disposes a fuel-pipe outlet 309 (the fuel-pipe outlet 309 is disposed either at the top of the tank 301 or at the bottom of the tank 301, and the fuel pipe 307 can join a pump to introduce the fuel in the tank), while the bottom of the fuel pipe 307 is divided into three branches rotating around shaft 306 (as a part of the oil circuit); the branches include first branch-pipe 311, second branch-pipe 312 and third branch-pipe 313, wherein the first branch-pipe 311 has a right angle and the ends of those branch-pipes form a first inlet 303, a second inlet 304 and a third inlet 305 respectively of the fuel-injecting pump or the oil-transmitting system, wherein the first branch-pipe 311 joins a float 302 and one end of a spring 308, and the other end is fixed to the bottom of the tank 301. Fig.3 shows the positions of three inlets of the oil-transmitting system when the fuel mixture passes the inlet 310 and fill the tank (liquid level not shown); the fuel at different height is pumped into the pipe at the same time and enters the oil-transmitting system through the fuel pipe 307. As both the float 302 and the spring 308 are fixed at the bottom of the tank 301 act, three branch-pipes with their inlets can rotate around the shaft 306 with the liquid level changing; the shaft 306 is supported by the fuel pipe 307 and the fuel-pipe outlet 309 is connected to the fuel-transmitting pump or the fuel-injecting pump. To ensure the fuel pumped or siphoned at the bottom into the fuel pipe 307, the front end of the third branch-pipe 313 with the inlet 305 can join a soft pipe (as PE pipe), or totally be made of a soft pipe. To transmit the fuel with different components constantly into the fuel-pipe 307, more than three parallel inlets are disposed (not shown). Fig.4 shows a schematic drawing of the positions of three inlets when the fuel mixture in the tank is completely used up, and Fig.5 is a side view of the Fig.4.

Fig. 6 is a schematic drawing of another outlet device for constantly outputting the fuel mixture, and a plurality of inlets of the oil-transmitting system with different height are disposed at one side of a tank 401 including a tank inlet 410; the outlet device for constantly outputting the fuel mixture disposes four inlets 403, 404, 405, 406 of the oil-transmitting system, which respectively are connected to a fuel-transmitting pump 402 by fuel channels, the fuel-transmitting pump is equipped as a pump device to pump the fuel into a fuel-injecting pump (the fuel-injecting pump can be disposed to pump the fuel instead of the oil-transmitting pump 402, which is not shown, thus, the oil-transmitting pump is not a must) according to the arrow direction; the fuel channel can dispose valves 407 with sensors 408, when the liquid level is so low that the inlet 403, 404, 405, or 406 is exposed in the air, supplement the fuel mixture to keep the liquid level in the tank, or close the corresponding valve 407 to prevent the air from entering the oil circuit; or, a piston-pushing device (not shown) coupled with the tank 401(preferably the cavity of the tank has a cylinder shape) is further disposed in the tank 401 and propelled to move the fuel mixture into the pipeline 409 of the fuel-injecting pump horizontally with constant pressure, when the fuel is used up, the piston returns to the other side of the tank 401, and fill the fuel mixture in the tank again. The pumping action by the oil-transmitting pump 402 (or with piston-pushing action at the same time) can make it easier for the fuel mixture with high content of combustible solid powder and low fluidity to transmit into the oil circuit of the engine. Additionally, the inlet of the fuel-injecting pump is disposed under all the inlets 403, 404, 405, 406 of the tank so that the fuel mixture can naturally flow and constantly enter the inlet of the fuel-injecting pump (not shown).

### Embodiment 14

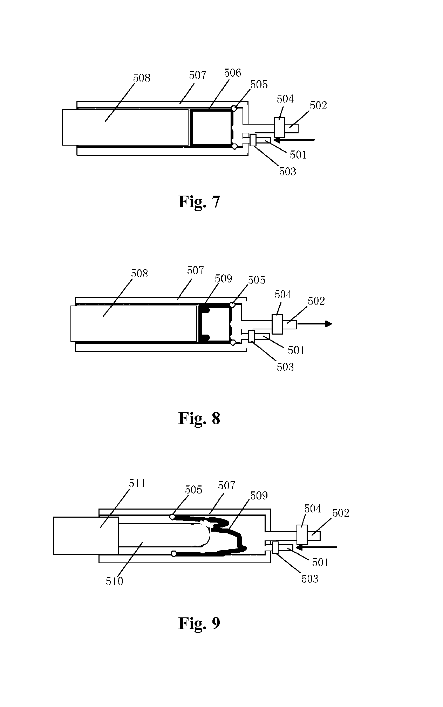

To decrease or avoid the accumulating between the plunger and its set that caused by solid particles as lignin etc. or impurities contained in the fuel in the fuel-injecting pump or the injector system of the engine, one or a plurality of piston rings is disposed at the front end of the plunger of the pump like oil rings of the piston of the engine cylinder; or one filter or one filter basket is disposed in front of the plunger to prevent solid particles of certain size from entering between the plunger and its set; differing from membrane technology as traditional membrane pumps, the filter (equal with the membrane) allows the liquid fuel to pass, thus, the filter is not under great net pressure. Fig.7 is a schematic drawing of a filter basket disposed in front of the plunger based on the present embodiment. As shown in Fig.7, a plunger is disposed at one end of a pump set 507, while an inlet 501 and an outlet 502 of the pump are disposed at the other end; the inlet 501 and the outlet 502 respectively dispose an input valve 503 and an output valve 504; a basket 506 is disposed between the plunger 508 and the outlet 502 and inlet 501, and one end of the basket 506 which is close to the outlet 502 is fixed to the inner wall of the pump set 507 by a collar 505. When the plunger 508 backs to the left (far from the inlet 501), the input valve 503 still opens (by controlling the left movement of the plunger 508 or by controlling the opening of the valve 503 to control the input amount ) to pass suitable fuel through the basket 506; the bottom part of the basket 506 is close to the surface of the plunger 508, and the basket 506 is made of soft materials as nylon with filter mesh of over 1,000; the fuel can pass but the solid particles of the fuel can't go into the space that is between the plunger 508 and the pump set 507; when the plunger 508 starts to move right (to the end of the inlet 501), the input valve 503 closes, and with the plunger 508 keeping moving (as shown in Fig.8), the bottom part of the basket 506 is squeezed to form wrinkles 509, and the increase of the pressure of the cavity forces the part to further close to the pump set 507 all-around, when the pressure of the output valve 504 reaches the predetermined value, the output valve 504 opens and outputs high-pressure oil. When the plunger 508 finishes one stroke of moving right, the output valve 504 closes while the input valve 503 opens, propelled by the pressure or the spring, the plunger 508 starts moving left (to the end that is far from the inlet 501) to complete a moving cycle, and the bottom part of the basket 506 still closes to the surface of the plunger 508 with the plunger 508 moves, while the wrinkles 509 are gradually released. To fix the filter basket 506, the top part of the basket 506 disposes a collar 505 that is around the basket 506 and fixed on the inner wall of the pump set 507; a slot is disposed on the inner wall of the pump set 507 to fix the collar 505. In practice, some plungers in the engine can have the inlet and outlet with one opening (valve) shared, and the direction of the inlet or outlet opening can be perpendicular to the moving direction of the plunger.

### Embodiment 15

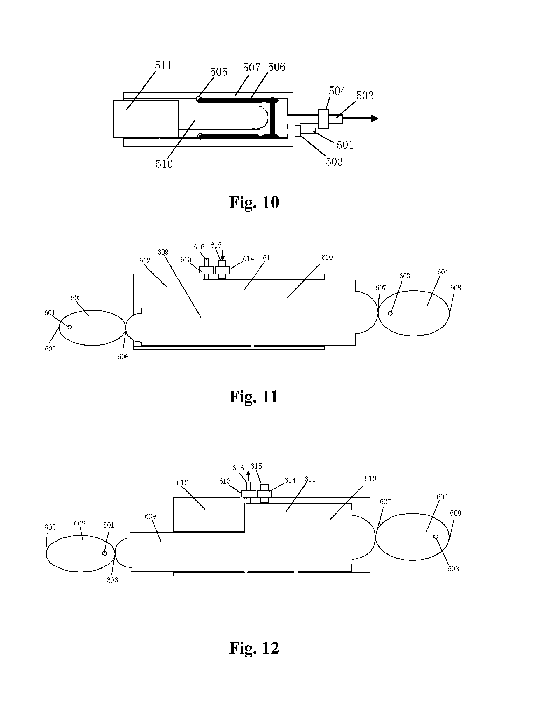

Like embodiment 14, Fig.9,10 are schematic drawings of another structure of the filter basket disposed with the plunger; the diameters of the plunger at two ends differ (the centers of the ends lie in one line); the diameter of the plunger at the front end 510 is smaller than that at the rear end 511; the basket 506 is a filter fixed to the inner wall of the pump set 507 by the collar 505 to allow the liquid fuel to pass but the solid powder of the fuel can't, and other structure is as same as ones shown in Fig.7,8. The basket 506 separates the front end 510 of the plunger from the solid particles of the fuel mixture from the inlet 501, and the front end 510 of the plunger will not have direct contacts with the pump set 507 to create friction because of it is slim. When the plunger is at the left side (far away from the inlet 501), as shown in Fig.9, the basket 506 is deflated as a wrinkles 509, and the fuel mixture enters the space where is on the right of the basket 506 (also the side of the inlet 501) from the inlet 501; when the plunger moves right, as shown in Fig. 10, the input valve 503 of the inlet 501 closes, and the front end 510 of the plunger propels the soft part of the basket 506 with it; the basket 506 should be large enough so that the soft part of the basket 506 will not contact with the plunger as it moves right only with lubricants of the fuel between them, and the space is reduced while the pressure of the fuel mixture increases so that the output valve 504 of the outlet 502 opens to output the fuel mixture. When the plunger moves left as starting a new cycle, as shown in Fig.9, the basket 506 with a soft part deflates, and the inlet valve 503 of the inlet 501 opens and inputs the fuel mixture whose amount is determined by controlling the opening of the input valve and its period thereof.

### Embodiment 16

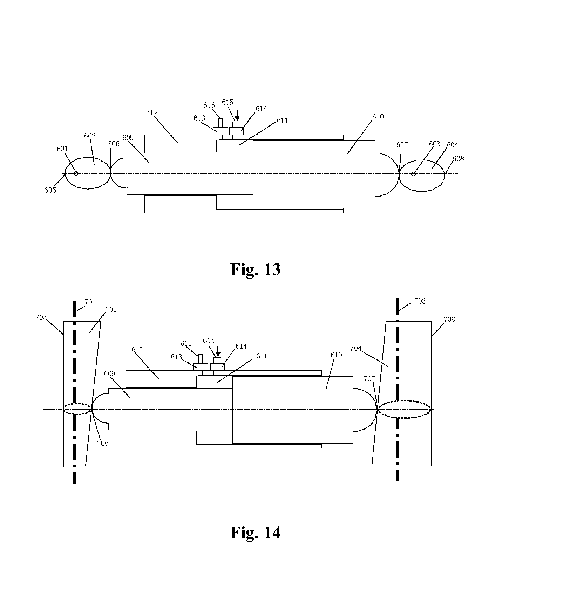

To avoid movement resistance of accumulation between the plunger and the plunger set that caused by combustible solid powder as lignin etc. or impurities contained in the fuel in the pump system so that the spring can't propel the plunger set to and fro, mechanical- propelling is adopted to substitute for spring-propelling, such as plungers propel each other. Fig. 11 is a schematic drawing of the plunger of the fuel-injecting pump provided in the present embodiment 16, wherein an inlet 615 and an outlet 616 are disposed at the top of the fuel-injecting pump, and an outlet valve 613 and an inlet valve 615 that can control the input amount are disposed on the outlet 616 and the inlet 615 respectively, the plunger (including a front end 609 and a rear end 610) is disposed inside the pump set (plunger set) 612, with two ends connected to a first cam 602 and a second cam 604 respectively and forming contacts 606, 607 at the junctions; an oil chamber (cavity) 611 is formed between the plunger and the plunger set (fixed to the engine itself) 612, and the first cam 602 and the second cam 604 can rotate about the shaft 601 and the shaft 603 (fixed to the engine itself) respectively, with remote contacts 605, 608 respectively; the front end 609 and the rear end 610 of the plunger are cylinders, and the centers of two ends do not lie at the same line, and the diameter of the front end 609 is smaller than that of the rear end 610. The inlet valve 614 and the outlet valve 613 of the fuel-injecting pump dispose publicly known springs or electromagnetic control mechanisms controlled by currents to open or close the valve (not shown). As shown in Fig. 11, the first cam 602 is at the farthest location along its stroke, with the contact 605 at the left and the contact 606 contacts with the front end 609; the second cam 604 is at the closest location along its stroke, with the contact 606 at the right and the contact 608 contacts with the rear end 610, the inlet valve 614 opens and the required fuel is filled with the oil chamber 611 from the inlet 615; with two cams continuing to rotate around the shaft 601, 603 collaboratively, the second cam 604 propels the plunger to move left, and the inlet 614 closes with the pressure in the oil chamber increasing, when the pressure reaches the predetermined output value, the outlet valve 613 opens and outputs the high-pressure fuel through the outlet 616. When the plunger completes moving left (as shown in Fig.12), the outlet valve 613 closes while the inlet valve 614 opens, and propelled by the first cam 602, the plunger starts to move right, when the plunger passes by the inlet 615 the fuel enters, thus, a cycle of operation is completed. Fig.11 and Fig.12 show the asymmetric structures of the plunger set 612 and the plunger; two parts of the plunger (including the front end 609 and the rear end 610) can have same diameter and form a coaxial cylinder (easy to manufacture), or have different diameters and form cylinders with different axis (not shown); Fig.13 shows the plunger in symmetric coaxial-cylinder shape; two parts of the plunger (including the front end 609 and the rear end 610) have different diameters, the plunger set 612 is coupled with the plunger, wherein, the difference between Fig.11,13 is that the centers of the front end 609 and of the rear end 610 lie at the same line based on the Fig.13, the two rotating shaft of the cams are interconnected by coupled gears (not shown), the drive shaft drives the second cam 604 and is connected to the rotating shaft of the engine, and the first cam 602 with comparatively small drive force is driven by the driven shaft which is interconnected with the drive shaft by coupled gears. The plunger structure shown in Fig.11, 12, 13 can be applied to the fuel-transmitting pump with low-pressure and fuel-injecting pump with high-pressure, or other structures of the plunger for adjusting the fuel and the pressure.

The action of propelling by two cams between each other can be replaced by that of pushing and pulling created by the second cam 604 only, that is, a bearing moving with the second cam 604 is assembled at the right side of the second cam 604 (not shown), the left point 606 of the front end 609 is interconnected to the right side of the bearing by a ring-like pulley, when the second cam 604 rotates and the plunger needs to move right, the ring-like pulley pulls the left point to move right.

### Embodiment 17

The plunger structure of the present embodiment is as same as that of the embodiment 16, except the cams 702, 704 with tapered shafts, as shown in Fig. 4, which substitute the cams 602, 604. The plunger 612 can move up and down and is fixed to at least two shafts of the engine (not shown), the positions of the contacts 706, 707 of the plunger is changed by moving the plunger 612 along the shafts 701, 703 of the cams 702, 704, and this change is corresponding with the loads and speeds of the engine. Since the positions of starting and/or ending squeezing the oil chamber 611 corresponding with the contacts 706, 707 differ, the effective amount of the oil chamber 611 can be controlled and the control of the maximum oil supply can be realized, by controlling the stroke of the cam movement. Fig. 4 shows the structures of the cams 702,704 with a changeable start position and an unchanged end position for squeezing the oil chamber 611, changing the shape of the cross-section of the cams 702, 704 that are perpendicular to the shafts 701, 703 can realize adjusting the supply during the pressuring period, releasing period, and transition period, and changing the gradients of the farthest contacts 705,708, as shown in Fig. 14 can change the sensitivity of adjusting the end position of pressuring.

### Embodiment 18

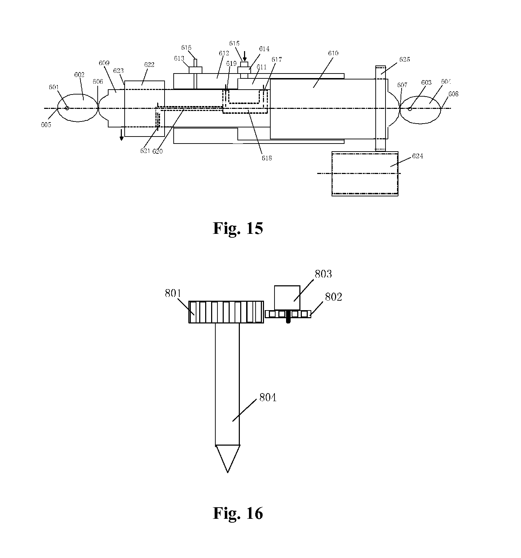

Similar structures and work principles of distributing fuel to each cylinder by publicly known VE single-piston pumps are adopted. Fig.15 shows another plunger structure, provided in the present embodiment, which is as same as the structure shown in Fig.11 to Fig.13, and the difference is that the plunger structure shown in Fig.15 also includes an oil adjusting set 622 disposed around the front of the front end 609, with one end 623 and an oil circuit inside the front end 609; wherein, the circuit includes a first center channel 618 whose end forms an inlet hole 617 connected with a cavity 611 while the other end forms a distributing hole 619; the circuit also includes a second center channel 620 whose end is connected with the first center channel 618 while the other end forms a leak hole 621.

The circuit is disposed inside the front end 609; high-pressure fuel from the cavity 611 enters the first center channel 618 through the inlet hole 617 at the front end 609, the front end 609 moves left so that the distributing hole 619 at the front end 609 is connected with an outlet 616 on the distributing set 612, that is, to supply the cylinders with high-pressure fuel; the second center channel 620 is connected with the first center channel 618 (to balance the output pressure, an outlet valve is assembled in the first center channel 618, now shown) and the leak hole 621; the oil-controlling mechanism controls the fuel adjusting set 622 to move along the front end 609 to control the leaking from the leak oil 621 (according to the arrow direction), when the leak hole 621 is exposed from the end of the oil adjusting set 622, the fuel begins leaking as well as ends high-pressure oil pumping, so that the pumping amount is controlled; the outlets 616 corresponding with the cylinders are disposed on the distributing set 612; the rotation of the plunger is driven by a gear 624 and a gear 625, and the gear 624 is linked with the rotating shaft 603 of the second gear 604, or the rotation of the plunger can also be directly driven by the rotating shaft which is connected to the plunger, and the movement of the plunger is driven by inner cams (as shown in Fig.11 to Fig.13)

### Embodiment 19

To decrease or avoid the accumulation between the needle valve and its couples that is caused by fuel with solid particles as lignin etc. or slight impurities of general fuel in the engine injector, a mechanical driving device controlled by currents is adopted to rotate the needle valve when injecting. The tail 801 of the needle valve 4 shown in Fig.16 has a gear structure, and the gear is connected with a small gear 802 on the electromagnetic driver 803 and moves with each other along the rack; when the needle valve 804 raises, the electromagnetic driver 803 controlled by currents rotates a given angle or for a given period by an electronic-control mechanism (the period is designed to meet the actual needs, eg. when the speed of the engine is 2,000r/min, the period is 0.01s or the angle 15°), to rotate the needle valve 804; the electromagnetic driver 803 controlled by currents and the needle valve 804 are fixed inside the injector and immersed in the fuel.

The above statements disclose preferable embodiments of the present invention only, which is not restricted to any forms of the present invention; if not beyond the scope composed by the technical features of the present invention, those skilled in the art adopting the equivalent embodiments for partial modifications or variations based on the technical contents disclosed and not violating these contents will be considered to still fall in the scope of the present invention.

## Claims

1. A fuel mixture used for combustions comprising a suspension of combustible solid powder and liquid fuel, wherein said combustible solid powder comprising one powder selected from lignin, nitrification products of biomass and total biomass powder or any combination thereof and said liquid fuel comprising one fuel selected from gasoline, kerosene, diesel, heavy oil used for combustions, emulsified heavy oil and absolute ethanol or any combination thereof.

2. A fuel mixture as claimed in claim 1 contains the combustible solid powder in an amount ranging from 0.1v% to 85v% and the liquid fuel as the remain.

3. A fuel mixture as claimed in claim 1, wherein the combustible solid powder having particle size of less than 150µm.

4. A fuel mixture as claimed in claim 1, wherein the total biomass powder is subjected to condensate stabilization.

5. A fuel mixture as claimed in claim 1, wherein the lignin is selected from original lignin, isolated lignin, degradation products of lignin, condensation polymerization products of lignin, partial oxidized lignin, partial deoxidized lignin, partial hydrolyzed lignin, acidolysed lignin, photolyzed lignin, biodegradated lignin, low-temperature pyrolyzed lignin, acylated lignin, alkylated lignin, nitrated lignin or any combination thereof.

6. A fuel mixture as claimed in claim 5, wherein the lignin is subjected to acidification.

7. A fuel mixture as claimed in claim 6, wherein the lignin or the acidified lignin is subjected to condensate stabilization.

8. A fuel mixture as claimed in claim 1 further comprising anthraquinone, 2-naphthol, naphthalene, methyl anthraquinone, hydroquinone, quinone, phenanthrene quinone, naphthoquinone, anthrone, quinone diol, naphthalene diol, phenanthrene diol, their alkyl, alkoxy, hydroxyl, amino, carboxyl derivatives, their precursors and tautomers, and their salts thereof in any one of the combinations.

9. A fuel mixture as claimed in claim 1 or 2 contains the combustible solid powder in an amount of not more than 50%.

10. A fuel mixture as claimed in claim 9 contains the combustible solid powder in an amount of not more than 25%.

11. A fuel mixture as claimed in claim 1, wherein the combustible solid powder having particle size of less than 50µm.

12. A fuel mixture as claimed in claim 1 or 11, wherein the combustible solid powder having particle size of less than 20µm.

13. A fuel mixture as claimed in claim 1 or 12, wherein the combustible solid powder having particle size of less than 1 µm.

14. A method of using the fuel mixture as claimed in claim 1 comprising a step of dynamic mixing the fuel mixture.

15. A method as claimed in claim 14, wherein the mixing step is performed by mechanical stirring, mechanical vibration or ultrasonic vibration.

16. An engine for using the fuel mixture as claimed in claim 1 comprising a tank with a dynamic mixing device or two tanks wherein one of the tanks having an inlet and an outlet and the tank further includes a dynamic-mixing device, a circulating pump device, a funnel-shaped feeding device, a compressor pressuring device or a piston-pushing device.

17. An engine as claimed in claim 16, wherein the dynamic-mixing device is a mechanical stirring device, a mechanical vibration device, an ultrasonic vibration device or an output device of uniformly releasing the fuel mixture.

18. An engine as claimed in claim 17, wherein the output device of uniformly releasing the fuel mixture includes an oil-transmitting system having a plurality of inlets distributed at different heights of the tank or an oil-transmitting system having an inlet which moves in consistent with the liquid level of the fuel mixture.

19. An engine as claimed in claim 18, wherein the plurality of inlets distributed at different heights of the tank is equipped with a piston-pushing device or a sucking device of an oil-transmitting pump.

20. An engine as claimed in claim 16, wherein the two tanks having one injector which is shared between the tanks and is connected to the tanks by two fuel channels respectively.

21. An engine as claimed in claim 20, wherein the injector joins to an outlet valve which includes an output sub-valve, a spring, and an input sub-valve, wherein the spring situated at the cavity of the outlet valve is having one end connected to the wall of the cavity while the other end connected to the input sub-valve which has an opening for receiving the fuel and is being connected to the output sub-valve by a link.

22. An engine as claimed in claim 20, wherein the injector joins to a screw pump feeding device.

23. A needle valve used for the engine as claimed in claim 16 comprising a mechanical driving device that rotates the needle valve.

24. A plunger used for the engine as claimed in claim 16 wherein a plunger ring is situated at the front end of the plunger or a filter set is situated in front of the plunger or a cam is situated at both ends which are respectively connected to the cam that drives the plunger for moving to and fro.

25. A method of using the fuel mixture as claimed in claim 1 by the engine as claimed in any of the claims 16-22.

26. A method of producing a fuel mixture containing combustible solid powder and liquid fuel comprising the steps of:
a) mixing the combustible solid powder and the liquid fuel; and
b) subjecting the mixture which is stirred, sheared and ground from step a) to distillation and dehydration and forming the fuel mixture containing the combustible solid powder and the liquid fuel.

27. A method as claimed in claim 26 comprising the steps of:
a) subjecting the combustible solid powder to drying and dehydration and mixing the dried combustible solid powder with liquid fuel; and
b) obtaining the mixture from step a) to be coarsely ground or finely ground and forming the fuel mixture containing the combustible solid powder and the liquid fuel.

28. A method as claimed in claim 27, wherein the drying and dehydration is carried out at a temperature ranging from 120-130 °C .

29. A method as claimed in claim 26, wherein the combustible solid powder is an acidified lignin which is subjected to acidification and is further subjected to condensate stabilization produced by the steps comprising of:
a) dissolving a lignin in water to obtain a lignin solution or using a paper-making waste liquid having lignin dissolved therein as the lignin solution;
b) adding an inorganic acid by pouring or spraying the acid to the lignin solution as obtained from step a) to acquire a flocculated acidified lignin precipitate;
c) subjecting the flocculated acidified lignin precipitate as obtained from step b) to washing, filtrating and drying steps;
d) mixing the flocculated acidified lignin precipitate as obtained from step c) with liquid fuel; and
e) shear-mixing the mixture as obtained from step d) and forming a colloidal fuel mixture.

30. A method as claimed in claim 29, wherein the step d) is performed by mixing the flocculated acidified lignin precipitate as obtained from step c) with the liquid fuel and further includes a step of adding a total biomass powder which has been subjected to condensate stabilization.

31. A method as claimed in claim 29 or 30, wherein the step e) is performed by shear-mixing the mixture as obtained from step d) and further includes a step of subjecting the mixture to distillation and dehydration and forming the fuel mixture.

32. A method as claimed in claim 29 further comprising the step of using the flocculated acidified lignin precipitate obtained from step c) or the mixture obtained from step d) or the colloidal fuel mixture obtained from step e) by nozzle spraying or injecting them to the surface of the fuel or into the fuel.

33. A method as claimed in claim 26, wherein the combustible solid powder is an acidified lignin which is subjected to acidification and is further subjected to condensate stabilization produced by the steps comprising of:
a) dissolving a lignin in water to obtain a lignin solution or using a paper-making waste liquid having lignin dissolved therein as the lignin solution;
b) adding an inorganic acid by pouring or spraying the acid to the lignin solution as obtained from step a) to acquire a flocculated acidified lignin precipitate;
c) subjecting the flocculated acidified lignin precipitate as obtained from step b) to washing, filtrating and drying steps;
d) spray drying the flocculated acidified lignin precipitate which has been washed, filtered and dried in step c) to acquire an acidified lignin powder or a condensate stabilized acidified lignin powder;
e) mixing the acidified lignin powder or the condensate stabilized acidified lignin powder as obtained from step d) with liquid fuel and forming the fuel mixture.

34. A method as claimed in claim 33, wherein the step d) is performed by drying the flocculated acidified lignin obtained from step c) to acquire the acidified lignin or the condensate stabilized acidified lignin both in the form of lumps; and
the step e) of subjecting the acidified lignin lumps or the condensate stabilized acidified lignin lumps to grinding and mixing with the liquid fuel and forming the fuel mixture.

35. A method as claimed in claim 26, wherein the lignin is extracted comprising the steps of:
1) dissolving a lignin in water to obtain a lignin solution or using a paper-making waste liquid having lignin dissolved therein as the lignin solution;
2) adding an inorganic acid by pouring or spraying the acid to the lignin solution as obtained from step a) to acquire a flocculated acidified lignin precipitate;
3) using the mixture as obtained from step 2) to be added with an organic solvent which is not compatible with water and subjecting the latter mixture to stirring, shearing and emulsifying steps and forming a colloidal emulsified mixture;
4) allowing the colloidal emulsified mixture to be standing still for causing the formation of stratified layers and thereby removing the water layer at the bottom and thus obtaining the colloidal emulsified mixture containing the colloidal acidified lignin, the organic solvent, and water; and
5) having the water and the organic solvent in the mixture from step 4) to be distilled and removed for acquiring the lignin or acidified lignin.

36. A method as claimed in claim 34, wherein the lignin is an acidified lignin which is subjected to dehydration by drying or distillation at a temperature of lower than 105 °C whereas spray drying at a temperature lower than 200 °C; or the lignin is a condensate stabilized acidified lignin which is subjected to dehydration by drying or distilling at a temperature of higher than 105 °C whereas spray drying at a temperature of not lower than 200 °C .

37. A method as claimed in claim 36, wherein the lignin is a condensate stabilized acidified lignin which is subjected to drying at a temperature ranging from 110-300°C, distillation at a temperature ranging from 110-150°C whereas spray drying at a temperature ranging from 200-350°C.

38. A method as claimed in claim 37, wherein the lignin is a condensate stabilized acidified lignin which is subjected to drying at a temperature ranging from 130-250°C, distillation at a temperature ranging from 120-130°C whereas spray drying at a temperature ranging from 250-300°C.

39. A method as claimed in claim 26, 29, 33 or 35, wherein the acidified lignin or the condensate stabilized acidified lignin has an average particle size of less than 1µm.

40. A method as claimed in claim 26, 29, 33 or 35 further comprising a step of adding anthraquinone, 2-naphthol, naphthalene, methyl anthraquinone, hydroquinone, quinone, phenanthrene quinone, naphthoquinone, anthrone, quinone diol, naphthalene diol, phenanthrene diol, their alkyl, alkoxy, hydroxyl, amino, carboxyl derivatives, their precursors and tautomers, and their salts thereof in any one of the combinations to the lignin solution as obtained from the step a).
